# EUROPÄISCHE PATENTANMELDUNG

(11) **EP 1 447 899 A1**
(43) Veröffentlichungstag der Anmeldung: **18.08.2004**
(21) Anmeldenummer: 04002562.9
(22) Anmeldetag: 05.02.2004
(51) Int. Cl.: H02K 9/18

(54) **Dynamoelektrische Maschine**

(30) Priorität: 13.02.2003 DE 10306071; 27.05.2003 DE 10324089
(71) Anmelder: Loher GmbH, 94099 Ruhstorf/Rott (DE)
(72) Erfinder: Klimt, Michael (FH), Dipl.-Ing-, 84375 Kirchdorf (DE)
(74) Vertreter: Zinnecker, Armin, Dipl.-Ing.

(57) **Zusammenfassung**

Eine dynamoelektrische Maschine mit einem geschlossenen Innenkühlkreislauf umfaßt einen Wärmetauscher in einem Wärmetauschergehäuse. Um eine derartige dynamoelektrische Maschine zu verbessern ist der Wärmetauscher als Plattenwärmetauscher mit Tauscherplatten (6) ausgebildet. Die Tauscherplatten (6) sind durch Abstandhalter (7) voneinander getrennt, die durch ein Prägeverfahren, insbesondere durch Tiefziehen, einseitig oder beidseitig in die Tauscherplatten (6) eingebracht sind (Fig. 5).

## Beschreibung

Die Erfindung betrifft eine dynamoelektrische Maschine mit einem geschlossenen Innenkühlkreislauf und einem Wärmetauscher in einem Wärmetauschergehäuse. Die dynamoelektrische Maschine kann als Motor oder Generator betrieben werden.

Dynamoelektrische Maschinen, beispielsweise Elektromotoren oder Generatoren, sind in der Regel mit einer in geeigneter Weise ausgebildeten Kühlung versehen, um die in der Maschine erzeugte Verlustwärme abzuführen. Eine Übersicht über mögliche Arten der Kühlung dynamoelektrischer Maschinen ist z.B. der IEC 34-6 zu entnehmen.

In elektrischen Maschinen größerer Leistung wird zur Verbesserung der Wärmeabfuhr aus dem Inneren der Maschine in der Regel eine Innenkühlung der Maschine ausgeführt. In diesem Falle strömt ein Kühlmedium (bei gasgekühlten Maschinen z.B. Luft oder ein anderes Kühlgas, bei flüssigkeitsgekühlten Maschinen Flüssigkeiten wie Kältemittel, Öle, wässrige Lösungen oder eine andere Flüssigkeit) in axialer Richtung durch den Luftspalt zwischen Rotor und Stator, gegebenenfalls durch axiale Kühlbohrungen im Rotor und gegebenenfalls durch axiale Kühlbohrungen im Stator. Gleichzeitig können zur Verbesserung der Kühlung zusätzliche radiale Kühlschlitze im Rotor und/oder im Stator ausgeführt sein.

In geschlossenen Maschinen (z.B. nach Schutzart IP 44 oder besser) ist der Kühlkreislauf als geschlossener interner Kühlkreislauf mit einem zusätzlichen Wärmetauscher zur Abgabe der Wärme an ein externes Kühlmedium ausgebildet. Die interne Kühlung kann dabei einflutig oder zweiflutig ausgebildet sein.

Bei Luft/Luft-gekühlten (bzw. verallgemeinert Gas/Gas-gekühlten) Motoren oder Generatoren mit Aufsatzkühlern werden heute in der Regel Röhrenkühler als Aufsatzkühler verwendet.

Dynamoelektrische Maschinen nach dem Oberbegriff des Anspruchs 1 sind bekannt. Es ist ferner bekannt, daß an die dynamoelektrische Maschine ein Kühler angebaut ist oder daß auf die dynamoelektrische Maschine ein Kühler aufgebaut ist. Bei den angebauten oder aufgebauten Kühlern handelt es sich in der Regel um Luft-Luft-Wärmetauscher oder um Luft-Flüssigkeits-Wärmetauscher.

Dem Stand der Technik entsprechend sind die angebauten oder aufgebauten Luft-Flüssigkeits-Wärmetauscher in der Regel als Lamellenwärmetauscher ausgebildet, wie sie auch aus der Verbrennungsmotorentechnik bekannt sind. Dabei strömt das flüssige Medium in Rohren, bei denen es sich um Metallrohre handeln kann. Die Rohre tragen an ihrer Außenseite Rippen bzw. Metallrippen, oder sie sind durch eine Rippenanordnung oder Lamellenanordnung aus Metall geführt, mit der sie in direktem Wärmeaustausch stehen, wobei die Metallrippen vom gasförmigen Medium umströmt werden. Bei einer dynamoelektrischen Maschine wird dem geschlossenen Innenumluftkreislauf als primärem Kühlkreislauf durch den Wärmetauscher Wärmeenergie entzogen. Das durch den Wärmetauscher strömende flüssige Medium wird als Sekundärkühlmedium in einem offenen System oder in einem geschlossenen Kühlkreislauf geführt.

Angebaute oder aufgebaute Luft-Luft-Wärmetauscher sind dem Stand der Technik entsprechend als Röhrenwärmetauscher ausgebildet. Die Wärmetauscherrohre des Röhrenwärmetauschers verlaufen in der Regel in axialer Richtung, bezogen auf die Welle der dynamoelektrischen Maschine, durch das Wärmetauschergehäuse. Sie sind an den Stirnseiten des Wärmetauschers formschlüssig, beispielsweise durch Einwalzen mit den Stirnflächen des Wärmetauschers verbunden. Auf diese Weise wird durch das Gehäuse des Wärmetauschers und die Außenoberfläche der Röhren der Innenraum des Wärmetauschers abgegrenzt. Im Inneren des Wärmetauschers strömt das Innenkühlmedium der dynamoelektrischen Maschine, im allgemeinen Luft. Durch die Röhren strömt das Sekundärkühlmedium, in der Regel Frischluft.

Plattenwärmetauscher werden in der Regel nur bei Flüssigkeits-Flüssigkeits-Wärmetauschern eingesetzt.

Rekuperative Plattenwärmetauscher sind aus der Literatur bekannt. Sie sind aus einzelnen, vorzugsweise identischen Tauscherplatten aufgebaut, zwischen denen sich jeweils aufeinanderfolgende, voneinander getrennte Strömungswege für zwei in indirektem Wärmeaustausch stehende Medienströme erstrecken. Die sich hierdurch bildenden, aufeinanderfolgenden Strömungswege werden von zwei Medienströmen, die in Wärmeaustausch über die Tauscherplatten stehen, vorzugsweise im Kreuzstrom durchströmt.

Plattenwärmetauscher für den Einsatz als Luft-Luft-Wärmetauscher werden bei dynamoelektrischen Maschinen aufgrund verschiedener Nachteile nicht eingesetzt.

So sind die bekannten und üblichen Plattenwärmetauscherkonstruktionen bezüglich ihres mechanischen Aufbaus kompliziert und durch den in der Regel mehrschichtigen Aufbau aus glatten Blechen als Trennelementen und zusätzlichen strukturierten Blechen als Abstandshalter teuer und in der Wirksamkeit des Wärmeübergangs nicht optimal.

Bei Luft-Luft-Wärmetauschern (bzw. verallgemeinert Gas/Gas-Wärmetauschern) sind Plattenwärmetauscher aufgrund der geringeren Wärmeübergangskoeffizienten und der damit verbundenen erforderlichen großen Wärmetauscheroberfläche und den sich hieraus ergebenden großen Wärmetauschern mit entsprechend großem Eigengewicht unüblich. Dies ist auch mit begründet durch den komplizierten Aufbau und die teilweise Störanfälligkeit dieser Kühler.

Aus der Literatur sind verschiedene Ausführungen von Plattenwärmetauschern bekannt. So ist aus der DE-GM 84 17 650 ein rekuperativer Plattenwärmetauscher bekannt, der aus Tauscherplatten besteht, die durch Abstandshalter in gegenseitigen Abständen voneinander gehalten werden. Zwischen den Tauscherplatten erstrecken sich jeweils aufeinanderfolgend Strömungswege für zwei beim Durchgang durch den Wärmetauscher im Kreuzstrom geführte und in indirektem Wärmeaustausch stehende Medienströme hindurch. Der Plattenwärmetauscher besitzt einen mehrschichtigen Aufbau aus glatten Blechen als Trennelementen und zusätzlichen strukturierten Blechen als Abstandshalter. Die Abstandshalter können mit wenigstens jeweils einer Tauscherplatte fest verbunden sein. Sie reichen zumindest bis unmittelbar an die benachbarte Tauscherplatte heran. Die Abstandshalter können als Stege oder Materialstreifen ausgebildet sein, die sich meanderartig zwischen den Tauscherplatten erstrecken oder die als Wellenprofil ausgebildet sind. Der Wärmetauscher nach der Vorveröffentlichung ist allerdings teuer, schwer und in der Wirksamkeit des Wärmeübergangs nicht optimal.

Weitere Ausgestaltungsvarianten und Verbesserungen für Plattenwärmetauscher sind aus den Veröffentlichungen DE 34 15 733 A1, DE 100 34 343 C2, EP 0 851 199 A2 und EP 1 022 533 A1 bekannt.

Auch in diesen Ausgestaltungsvarianten ist ein Einsatz eines Plattenwärmetauschers als Luft-Luft-Wärmetauscher bei dynamoelektrischen Maschinen aus Gründen der komplizierten Luftführung im Innenkühlkreislauf und den daraus resultierenden Problemen zur Erreichung einer gleichmäßigen Luftströmung in den verschiedenen Teilbereichen des Kühlers technisch nicht möglich. Die zusätzlichen hohen Kosten und der technische Aufwand bei der Abdichtung des Kühlers zur Erreichung einer entsprechenden mechanischen und elektrischen Schutzart von IP 44 oder besser machen den Einsatz dieser Kühler bei dynamoelektrischen Maschinen unzweckmäßig.

Die genannten Probleme führen dazu, daß bis heute bei geschlossenen dynamoelektrischen Maschinen mit Aufsatzkühlern für sogenannte Luft-Luft-Kühlung Rohrbündelkühler (Wärmetauscher) standardmäßig eingesetzt werden.

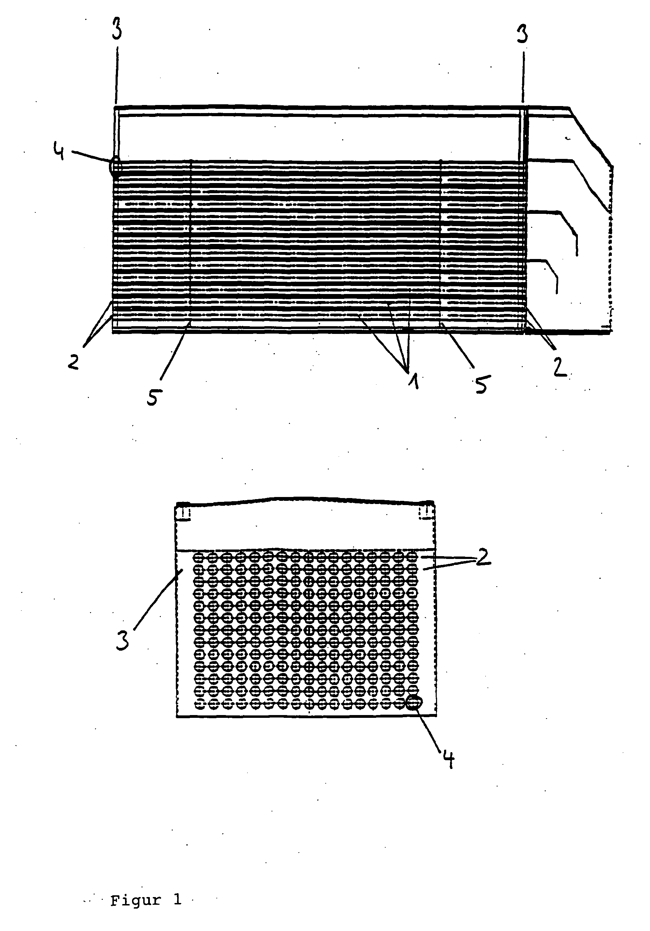

- Figur 1: zeigt als Beispiel einen derartigen Rohrbündelkühler (Wärmetauscher) für eine dynamoelektrische Maschine in einer Seitenansicht (oben) und in einer Ansicht von vorne (unten). Kühlrohre 1 werden in Bohrungen 2 der Stirnflächen 3 des Kühlers gehalten und gegen den Kühlerinnenraum an Dichtstellen 4 in geeigneter Weise abgedichtet. Gegebenfalls sind im Kühler Zwischenwände 5 zur Abstützung der Kühlrohre 1 und zur Luftführung vorhanden. Durch die Kühlrohre 1 strömt das Außenkühlmedium (z.B. Luft). Im Kühler werden die einzelnen Kühlrohre 1 durch das Innenkühlmedium der dynamoelektrischen Maschine umströmt. Durch geeignete Führungs- und Umlenkbleche wird dabei der Kühlmediumstrom im Inneren des Kühlers geführt. Auch diese Kühlerkonstruktion ist sehr aufwendig und kostenintesiv.

Aufgabe der Erfindung ist es daher, eine dynamoelektrische Maschine der eingangs angegebenen Art zu verbessern.

Erfindungsgemäß wird diese Aufgabe durch die kennzeichnenden Merkmale des Anspruchs 1 gelöst. Der Wärmetauscher ist als Plattenwärmetauscher mit Tauscherplatten ausgebildet. Die Tauscherplatten sind durch Abstandhalter voneinander getrennt, die durch ein Prägeverfahren, insbesondere durch Tiefziehen, einseitig oder beidseitig in die Tauscherplatten eingebracht sind. Durch die derart angeformten Abstandshalter werden die Tauscherplatten, die vorzugsweise identisch sind, in einem definierten Abstand voneinander gehalten.

Vorteilhafte Weiterbildungen sind in den Unteransprüchen beschrieben.

Der Plattenwärmetauscher ist vorzugsweise als Gas-Gas-Wärmetauscher, insbesondere als Luft-Luft-Wärmetauscher ausgebildet. Vorzugsweise handelt es sich um einen sogenannten rekuperativen Plattenwärmetauscher.

Vorteilhaft ist es, wenn der Strömungsweg für den Sekundärkühlmediumstrom parallel zum Rotor der dynamoelektrischen Maschine verläuft. Der Strömungsweg für den Sekundärkühlmediumstrom verläuft also vorzugsweise in axialer Richtung der dynamoelektrischen Maschine.

Die Strömungswege für die Medienströme im Plattenwärmetauscher sind vorzugsweise im Kreuzstrom geführt. Wenn der Strömungsweg für den Sekundärkühlmediumstrom parallel zum Rotor der dynamoelektrischen Maschine verläuft, verläuft der Strömungsweg für den Primärmediumstrom vorzugsweise in radialer Richtung der dynamoelektrischen Maschine.

Vorteilhaft ist es, wenn der Plattenwärmetauscher aus mehreren Modulen besteht. Die Module können baugleich sein. Sie können sich allerdings auch voneinander unterscheiden. Vorzugsweise sind die Strömungswege für die Medienströme in den einzelnen Modulen jeweils im Kreuzstrom geführt.

Eine weitere vorteilhafte Weiterbildung ist dadurch gekennzeichnet, daß die Module in Richtung parallel zum Rotor der dynamoelektrischen Maschine nebeneinander angeordnet sind. Der Strömungsweg für den Sekundärkühlmediumstrom verläuft vorzugsweise parallel zum Rotor der dynamoelektrischen Maschine, und zwar vorzugsweise durch den gesamten Wärmetauscher, also durch alle Module hindurch. Vorteilhaft ist es, wenn die Strömungswege für den Primärmediumstrom durch die Module in radialer Richtung zum Rotor der dynamischen Maschine verlaufen. Vorzugsweise sind die Strömungswege für den Primärmediumstrom durch die Module voneinander getrennt.

Durch eine entsprechende Ausgestaltung des Plattenwärmetauschers können sich im Innenkühlkreislauf in axialer Richtung der dynamoelektrischen Maschine mehrere voneinander getrennte Bereiche ergeben, die in unterschiedlicher Richtung vom Innenkühlmedium (Primärmedium) der elektrischen Maschine durchströmt werden, während sich in axialer Richtung durch den gesamten Wärmetauscher führende Kühlkanäle für das Außenmedium (Sekundärkühlmedium) ergeben.

Nach einer weiteren vorteilhaften Weiterbildung sind zwischen dem Stator der dynamoelektrischen Maschine und dem Plattenwärmetauscher Luftführungselemente vorgesehen. Durch derartige zusätzliche Luftführungselemente zwischen der dynamoelektrischen Maschine und dem angebauten Wärmetauscher bzw. aufgebauten Wärmetauscher kann ein gleichmäßiger Lufteintritt in den Plattenwärmetauscher erreicht werden, insbesondere in Richtung quer zum Rotor (also in radialer Richtung quer zur Rotor-Drehachse).

Weitere vorteilhafte Weiterbildungen sind in den weiteren Unteransprüchen beschrieben.

Ausführungsbeispiele der Erfindung werden nachstehend anhand der beigefügten Zeichnung im einzelnen erläutert. In der Zeichnung zeigt
- Fig. 2A und 2B: eine Prinzipskizze eines erfindungsgemäßen Plattenwärmetauschers mit quadratischem Grundaufbau in einer Ansicht von vorne (oben), in einer Seitenansicht (unten) und in zwei vergrößerten Teilansichten sowie (Fig. 2B) in einer Ansicht von vorne (links) und in einer Seitenansicht (rechts),
- Fig. 3: eine quadratische Wärmetauscherplatte als Grundbaustein zum Aufbau des in Fig. 2 gezeigten Plattenwärmetauschers in einer Ansicht von vorne (unten) und in einer Seitenansicht (oben), teilweise vergrößert,
- Fig. 4: eine Prinzipskizze eines erfindungsgemäßen Plattenwärmetauschers mit rechteckigem Grundaufbau in zwei perspektivischen Darstellungen,
- Fig. 5: eine rechteckige Wärmetauscherplatte als Grundbaustein zum Aufbau des in Fig. 4 gezeigten Plattenwärmetauschers in einer perspektivischen Darstellung,
- Fig. 6: eine dynamoelektrische Maschine mit zweiflutigem Innenkühlkreislauf und aufgebautem Gas-/Gas-Plattenwärmetauscher und
- Fig. 7: den in Fig. 6 gezeigten, in Modulbauweise ausgeführten Plattenwärmetauscher in einer Ansicht von vorne und zwei Seitenansichten.

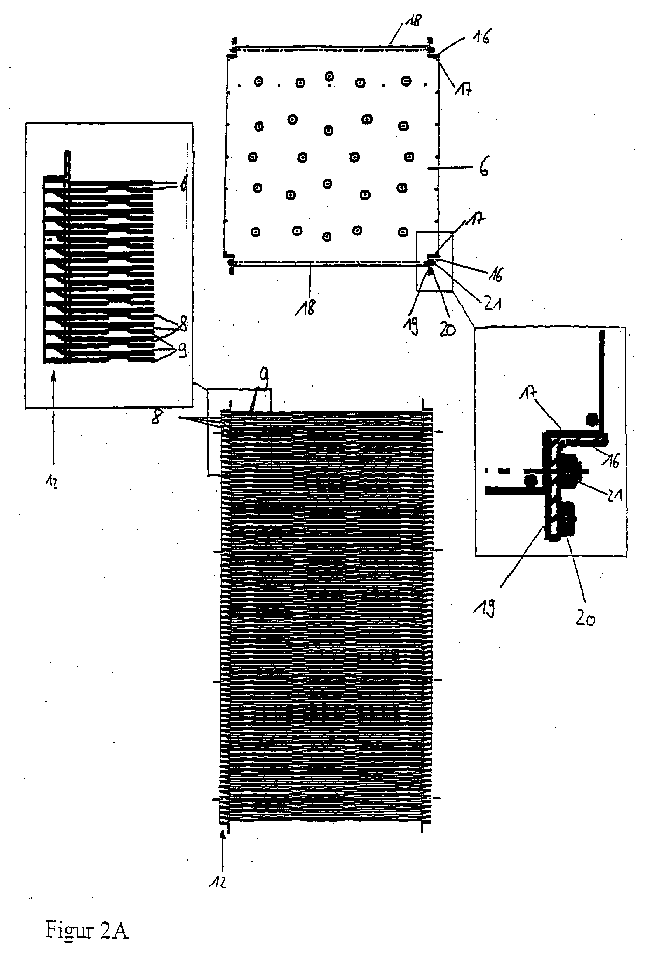

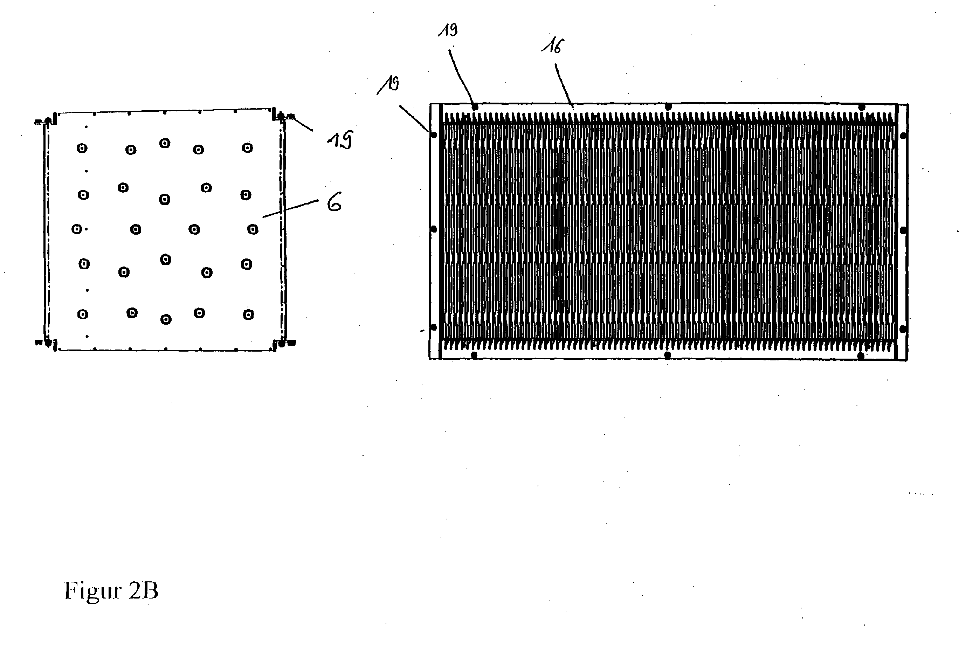

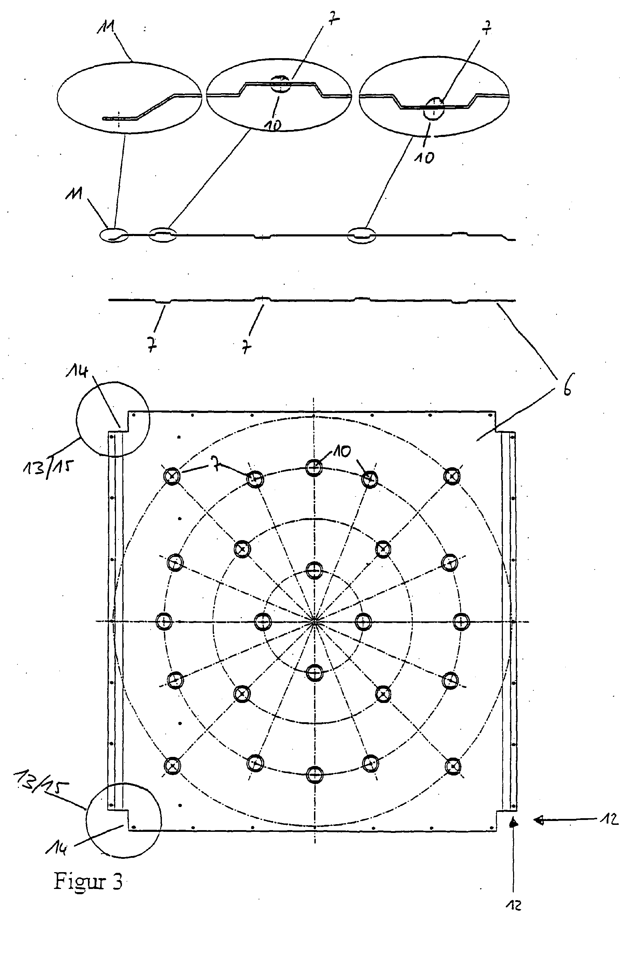

Die Figuren 2A und 2B zeigen eine Prinzipskizze eines erfindungsgemäßen Plattenwärmetauschers entsprechend den einzelnen Ausgestaltungsmerkmalen der Erfindung. Figur 3 zeigt hierzu eine einzelne als Wärmetauscherblech mit quadratischem Umriß ausgestaltete Tauscherplatte 6, in die durch ein Prägeverfahren, insbesondere durch Tiefziehen, Abstandhalter 7 eingebracht sind. Der rekuperative Plattenwärmetauscher umfaßt die Tauscherplatten 6, die durch die Abstandhalter 7 voneinander getrennt sind.

Ein vorteilhafter Gedanke der Erfindung besteht darin, den rekuperativen Plattenwärmetauscher aus einzelnen Blechen, die Tauscherplatten 6 bilden, aufzubauen und dabei durch Tiefziehen oder ähnliche Prägeverfahren bereits in den einzelnen Tauscherplatten die jeweiligen Abstandhalter 7 zu integrieren. Dies erübrigt die in bisherigen Vorschlägen wie z.B. in der DE-GM 84 17 650 notwendigen zusätzlichen Abstandhalter (z.B. Wellbleche). Als Ausgangsmaterial können dabei verschiedenste Blechsorten eingesetzt werden wie z.B. schwarzes Blech, verzinktes Blech oder Bleche aus rostfreiem Stahl. Erfindungsgemäß können diese Abstandhalter 7 dabei sowohl einseitig als auch beidseitig in das Grundmaterial der einzelnen Tauscherplatten 6 eingeprägt werden.

Die einzelnen Tauscherplatten 6 werden über die eingeprägten Abstandshalter 7 voneinander getrennt so gestapelt, daß sich zwischen zwei aufeinanderfolgenden Tauscherplatten 6 getrennte Strömungswege 8, 9 für zwei beim Durchgang durch den Wärmetauscher im Kreuzstrom geführte Kühlmedienströme ergeben. Der Abstand zwischen den einzelnen Tauscherplatten 6 wird dabei durch die Überhöhungen der Ausprägungen für die Abstandshalter 7 und gegebenenfalls durch das Aufeinandertreffen von Ausprägungen 7 aufeinderfolgender Tauscherplatten 6 definiert.

Die mechanische Verbindung der einzelnen Tauscherplatten 6 des rekuperativen Plattenwärmetauschers erfolgt vorteilhaft durch punktuelles, lokales Verbinden der einzelnen Tauscherplatten 6 an den Stellen der Abstandhalter 7 (z.B. durch Schweißverfahren wie Punktschweißen, durch Löten, Prägen, Kleben oder durch Zusammennieten). Erfindungsgemäß ist es für die kostengünstige Herstellung des Plattenwärmetauschers vorteilhaft, im Falle einer Nietverbindung die entsprechenden Löcher 10 zum Einsetzen der Nieten bereits während des Prägens der Abstandhalter mit auszustanzen. Analoges gilt für etwaige Löcher in den die Tauscherplatten 6 bildenden Blechen, die zum punktuellen, lokalen Verschweißen der Bleche erforderlich sind. Vorzugsweise wird beim Einsatz von Nietverbindungen gleichzeitig mit der mechanischen Verbindung der einzelnen Tauscherplatten 6 eine formschlüssige Abdichtung zwischen den einzelnen Tauscherplatten 6 an den Stellen der Nieten (am Durchtritt der Nieten durch die Tauscherplatten) erreicht. Bei den eingesetzten Nieten kann es sich um Blindnieten oder Bechernieten handeln. Im Falle des Einsatzes von Schweißverfahren zur mechanischen Verbindung dürfen erfindungsgemäß an der Schweißstelle keine Undichtigkeiten auftreten, die einen Austausch von Kühlmedien über die Plattengrenze hinweg gestatten.

Ein Problem bei der Ausgestaltung der Erfindung stellt die Abdichtung der einzelnen Strömungskanäle in den Randbereichen der Tauscherplatten 6 dar. Entsprechend einer vorteilhaften Ausgestaltung der Erfindung erfolgt die Abdichtung der einzelnen Kühlkanäle 8, 9 des Plattenwärmetauschers in den Randbereichen der Tauscherplatten 6 dadurch, daß die einzelnen Tauscherplatten 6 in ihren Randbereichen entsprechende Abkantungen 11, idealerweise mit einem Winkel zwischen 15° und 60°, aufweisen, die so angeordnet und dimensioniert sind, daß sich die einzelnen Tauscherplatten 6 beim Aufeinanderstapeln während des Zusammenbaus aufgrund des sich durch die Anordnung der Abstandhalter 7 ergebenden Abstandes zwischen den einzelnen Tauscherplatten 6 in den Randbereichen 12, die abgedichtet werden sollen, gerade berühren oder sehr nahe kommen. Bei einer kostenoptimierten Herstellung des Plattenwärmetauschers werden diese Abkantungen 11 zusammen mit dem Prägen der Abstandhalter 7 in einem Arbeitsgang hergestellt. Vorzugsweise erfolgt die Verbindung und/oder Abdichtung der einzelnen Tauscherplatten 6 in diesen Randbereichen 12 durch Bördelung, durch Verschweißung, durch Klebung oder durch Verlötung. Unterstützend kann in allen Fällen eine zusätzliche Vernietung erfolgen, die sowohl als Montagehilfe als auch insbesondere im Falle der Verklebung als zusätzliche mechanische Fixierung dienen kann. Die Klebemasse kann dabei auch lediglich als Dichtmasse dienen, während die eigentliche mechanische Verbindung durch die Vernietung erfolgt.

Ein weiteres Problem bei der Abdichtung der einzelnen gekreuzten Strömungswege in einem erfindungsgemäßen Plattenwärmetauscher stellen die Kanten 13 dar, an denen die einzelnen kreuzförmigen Strömungsrichtungen zusammentreffen. In einer vorteilhaften Ausgestaltung der Erfindung werden an diesen Kanten spezielle L-förmige Ausklinkungen 14 vorgesehen, die durch L-förmige Ausstanzungen 15 in den Grundblechen der Tauscherplatten 6 entstehen. Auch diese Ausklinkungen 14 werden in einem kostenoptimierten Herstellungsverfahren bereits beim Prägen der Abstandhalter 7 mit ausgestanzt. In die so entstehenden L-förmigen Ausklinkungen 14 an den Kanten des Wärmetauschers werden L-oder U-förmige Blechprofile 16 mit zusätzlichen geeigneten Dichtstreifen 17 zur Abdichtung eingebracht und z.B. über eine Rahmenkonstruktion (auch zur mechanischen Stabilisierung der Wärmetauschereinheit) oder über Gewindestangen 18 als Zugstangen und gesicherte Muttern 21 und/oder über speziell vorgesehene Halterungen 19 und Schrauben 20 fixiert. Die Dichtstreifen 17 können an hierfür vorgesehenen Aussparungen angebracht sein.

Die L-Profile oder U-Profile 16 können, zusammen mit den Zugstangen 18, Muttern 21, Halterungen 19 und Schrauben 20, auch als eigenständiger Rahmen bzw. Tragrahmen ausgebildet sein, der der Wärmetauschereinheit mechanische Stabilität, insbesondere für Transport und Montage im Wärmetauschergehäuse, verleiht.

In einer weiteren vorteilhaften Ausgestaltungsvariante der Erfindung können neben den Abstandhaltern 7 in die Grundbleche der einzelnen Tauscherplatten 6 zusätzliche Prägungen zur Erhöhung der Oberfläche (der aktiven Wärmetauscherfläche), zur Verbesserung bzw. Erhöhung der Luftverwirbelung im Plattenwärmetauscher oder zur Verbesserung der Luftführung im Plattenwärmetauscher eingebracht sein. In einer kostengünstigen Ausgestaltungsvariante werden auch diese Prägungen in einem Arbeitsgang zusammen mit den Prägungen der Abstandhalter eingebracht.

Zusätzliche Luftfinnen können in die Tauscherplatten 6 eingebracht oder an diesen befestigt sein.

Weitere Möglichkeiten zur Optimierung der Herstellungskosten eines erfindungsgemäßen rekuperativen Plattenwärmetauschers ergeben sich durch eine besondere topologische Gestaltung der Tauscherplatten 6, die es gestattet, den gesamten Plattenwärmetauscher durch entsprechendes Verdrehen der einzelnen Tauscherplatten 6 aufzubauen. Dabei ist bei rechteckigen Tauscherplatten 6 eine Drehung um 180° um eine Achse senkrecht zur Plattenebene sowie um 180° um eine Achse in der Plattenebene möglich. Im Falle von quadratischen Tauscherplatten 6 ist eine Drehung um 90° oder 180° um eine Achse senkrecht zur Plattenebene sowie um 180° um eine Achse in der Plattenebene möglich.

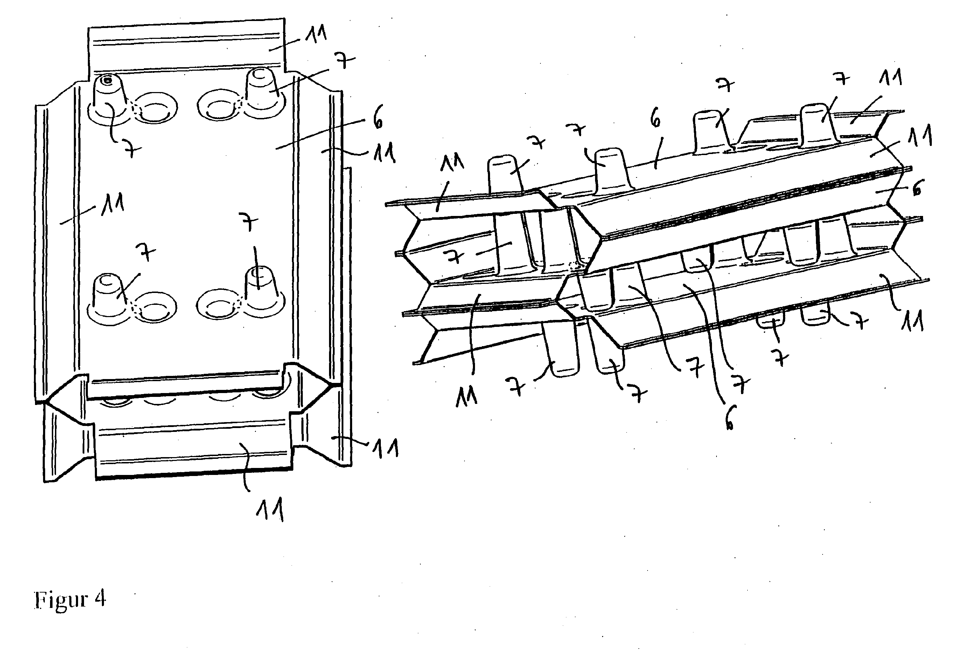

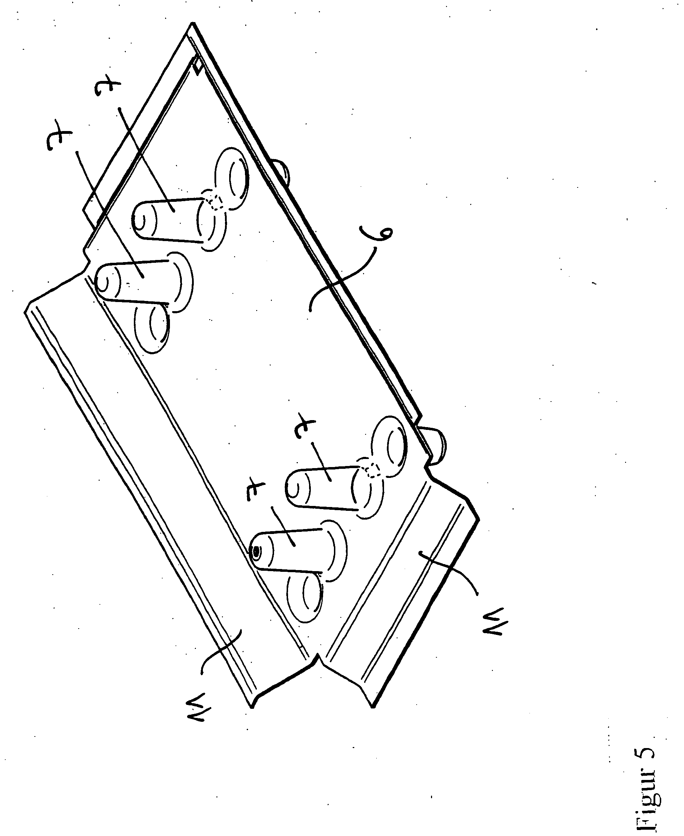

Figur 3 zeigt das Beispiel einer entsprechenden quadratischen Tauscherplatte 6, Figuren 2A und 2B den sich durch entsprechendes Kombinieren von zueinander verdrehten derartigen Tauscherplatten 6 ergebenden Wärmetauscher. Figur 4 und 5 zeigen dies analog am Beispiel einer rechteckigen Grundstruktur. Durch die entsprechende Ausgestaltung der geprägten Abstandhalter 7 können dabei in beiden gezeigten Beispielen noch zusätzlich unterschiedliche Plattenabstände für die beiden unabhängigen kreuzförmigen Kühlmediumsströme realisiert werden, um den Wärmetauscher entsprechend vorgegebener Stoffmengenströme und gewünschter Wärmetauschereigenschaften zu optimieren.

In einer weiteren erfidnungsgemäßen Ausgestaltung lassen sich mehrere derartige Wärmetauschermodule, wie sie in Fig. 2 bzw. Fig. 4 gezeigt sind, durch einfaches Aneinandersetzen zu einem größeren Wärmetauscher zusammensetzen, um die Leistung des Wärmetauschers modular an die entsprechenden Erfordernisse anzupassen. Durch die oben erläuterten Ausklinkungen 14 in den Ecken der einzelnen Tauscherbleche 6 entstehen an den Verbindungsstellen zwischen den einzelnen Wärmetauschermodulen U-förmige Aussparungen, in die analog zu den L-Profilen nun passende U-förmige Profile mit geeigneten Dichtstreifen, z.B. aus Silikonmoosgummi oder ähnlichen Materialien, eingesetzt und über eine Rahmenkonstruktion oder über die Haltevorrichtungen oder Gewindestangen als Zugstangen fixiert werden können. Auf diese Weise erfolgt sowohl eine Abdichtung der einzelnen Module in den Ecken als auch eine mechanische Verbindung der einzelnen Module.

Die Kombination mehrere gleichartiger Module der beschriebenen Art zu einem Gesamtwärmetauscher ist für die Gestaltung der Luftführung des Innenkühlkreislaufs im Wärmetauschergehäuse von besonderem Vorteil. Dabei ist es besonders vorteilhaft, wenn die einzelnen Wärmetauschermodule bezüglich des Innenkühlkreislaufs in unterschiedlichen, um 180° zueinander versetzten Richtungen durchströmt werden.

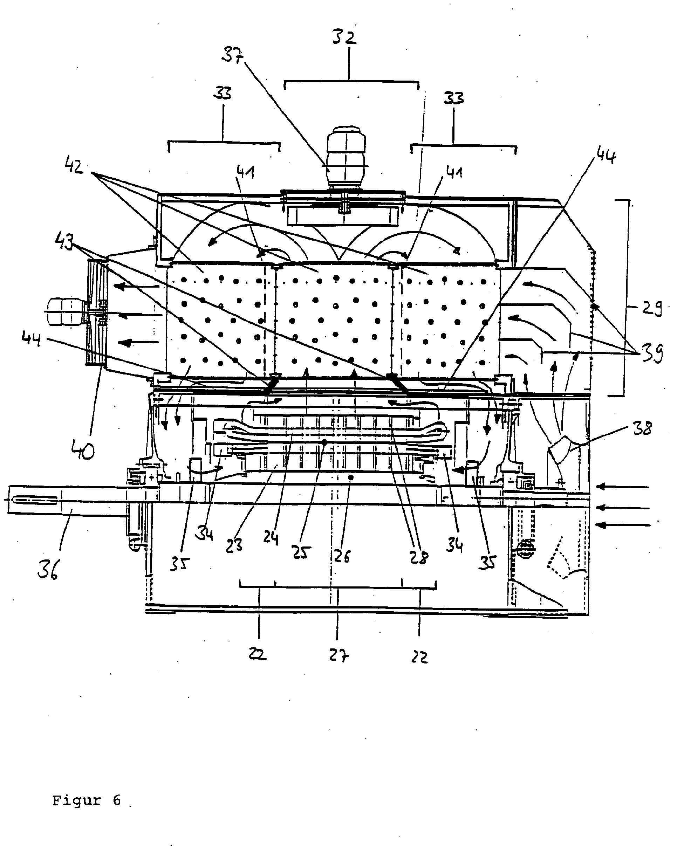

Fig. 6 zeigt eine dynamoelektrische Maschine mit einem geschlossenen Innenkühlkreislauf und einem angebauten Gas-Gas-Wärmetauscher in einem Wämetauschergehäuse, wobei der Wärmetauscher entgegen den normalerweise üblichen Rohrbündeltauschern als rekuperativer Plattenwärmetuascher ausgebildet ist, und der Kühlmediumsstrom des Innenkühlkreislaufs der Maschine und der externe Kühlmediumsstrom in indirektem Wärmeaustausch stehen und zwischen den jeweils aufeinanderfolgenden, voneinander durch die Tauscherplatten getrennten Strömungswegen im Kreuzstrom geführt werden. Die einzelnen Tauscherplatten des Wärmetauschers sind durch Abstandhalter voneinander getrennt, die durch Tiefziehen oder ähnliche Prägeverfahren einseitig oder zweiseitig vor dem mechanischen Aufbau des Wärmetauschermoduls in die einzelnen Tauscherplatten eingebracht wurden.

Die besondere Ausgestaltung des rekuperativen Plattenwärmetauschers kann mit den oben beschriebenen Merkmalen erfolgen.

Besonders günstig ist eine erfindungsgemäße Ausgestaltung bei dynamoelektrischen Maschinen in sogenannter zweiflutiger Ausführung zu realisieren. Fig. 6 zeigt schematisch den Kühlkreislauf einer dynamoelektrischen Maschinen in zweiflutiger Ausführung: Das interne Kühlmedium strömt von den Randbereichen 22 des Rotorblechpakets 23 und des Statorblechpakets 24 über den Luftspalt 25 und optionale, axiale Kühlkanäle 26 in Rotor- und Statorblechpaket in die zentralen Bereiche 27 von Stator- und Rotorblechpaket und wird hier über radiale Kühlschlitze 28 im Stator und gegebenenfalls im Rotor (bei Rotoren mit axialen Kühlbohrungen im Rotorblechpaket) in den Kühler bzw. Wärmetauscher 29 geführt. Nach einem ersten Durchströmen des Plattenwärmetauschers 29 in seinem zentralen bzw. mittleren Bereich 32 erfolgt eine Umlenkung des internen Kühlmittelstromes und ein erneutes Durchströmen des Plattenwärmetauschers in den äußeren Bereichen bzw. Randbereichen 33 mit einer Rückführung des Kühlmediums in die dynamoelektrische Maschine. Getrieben wird der interne Kühlmediumsstrom durch die Radiallüfterwirkung des sich drehenden Rotorblechpaketes 23, gegebenenfalls mit zusätzlicher entsprechender Ausbildung des Rotors zur Unterstützung des Radiallüfterwirkung, z.B. durch angebaute Lüfterflügel 34, unterstützt gegebenenfalls von Axiallüftern 35 auf der Rotorwelle 36, die das Kühlmedium in Richtung der Blechpakete von Stator und Rotor drücken, und gegebenfalls unterstützt durch eine zusätzliche Lüfteranordnung 37 im Anbaukühler (Wärmetauscher). Der externe Kühlmediumsstrom wird angetrieben durch einen Lüfter 38, der direkt auf der Hauptrotorwelle 36 sitzt, wobei das geförderte Kühlmedium, vorzugsweise Umgebungsluft, über geeignete Luftführungselemente 39 in den angebauten Plattenwärmetauscher geführt wird. Alternativ zum Lüfter auf der Hauptrotorwelle kann der externe Kühlmediumstrom auch durch einen separaten Lüfter 40, der direkt am Wärmetauschergehäuse angebaut oder in dieses integriert ist, getrieben werden.

Die oben beschriebene Luftstromführung des Innenmediums wird durch geeignete Luftführungselemente 41 im Plattenwärmetauscher realisiert.

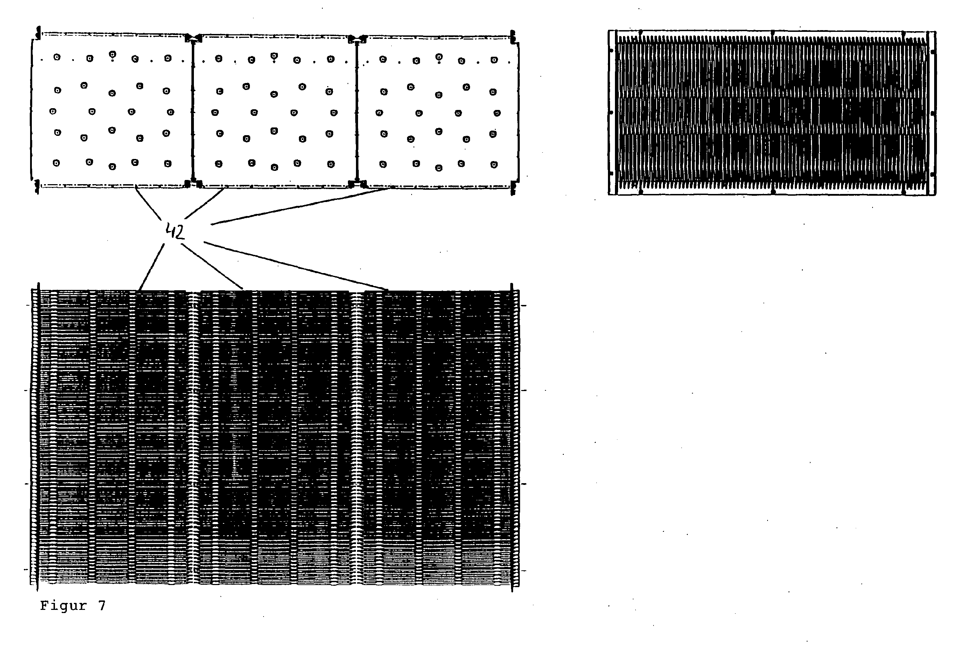

In der Ausgestaltung der Erfindung nach Fig. 7 ist der Plattenwärmetauscher für die dynamoelektrische Maschine aus einzelnen, nämlich drei, vorzugsweise baugleichen Modulen 42 aufgebaut, die an ihren Verbindungsstellen - wie weiter oben beim Aufbau des Plattenwärmetauschers bereits beschrieben - durch entsprechende, z.B. U- und/oder L-förmige Blechprofile mit zusätzlichen Dichtstreifen, die in hierfür vorgesehenen Aussparungen der einzelnen Module angebracht sind, verbunden und abgedichtet werden. Hierbei sind die einzelnen Module des Plattenwärmetauschers so angeordnet, daß sie, gegebenenfalls zusammen mit zusätzlichen Abstands- und Dichtelementen 43 zwischen Wärmetauschermodul und dynamoelektrischer Maschine oder direkt zusammen mit den in der dynamoelektrischen Maschine vorhandenen Luftführungselementen 44, aber ohne die Notwendigkeit der oben genannten zusätzlichen Luftführungselemente, im Plattenwärmetauscher 41 einen Innenkühlkreislauf einer zweiflutigen dynamoelektrischen Maschine mit angebautem Plattenwärmetauscher in zweiflutiger Ausführung realisieren.

Gegenüber dem derzeitigen Stand der Technik zur Gestaltung eines Gas-Gas-Kühlers insbesondere für dynamoelektrische Maschinen als Rohrbündelkühler erlaubt die erfindungsgemäße Ausgestaltung eines Plattenwärmetauschers eine Variante, die sich zunächst durch einen einfachen Aufbau und damit durch Einsparung von Herstellkosten auszeichnet.

Gleichzeitig ermöglicht eine günstige Ausgestaltung des Wärmetauschers bzw. des Wärmetauschermoduls eine Einsparung von Gewicht und unter Umständen auch einen Bauvolumenvorteil gegenüber einem konventionellen Rohrbündelwärmetauscher.

Damit wird der Einsatz von erfindungsgemäßen Plattenwärmetauschern auch für den Einsatz bei dynamoelektrischen Maschinen in geschlossener Ausführung mit Luft-Luft-Kühlung konkurrenzfähig.

Durch den Aufbau des Plattenwärmetauschers aus einzelnen gleichartigen Tauscherplatten ist eine einfache Größenskalierbarkeit des Wärmetauschers bzw. des Wärmetauschermoduls gegeben. Durch den modulartigen Aufbau des Wärmetauschers aus einzelnen Wärmetauschermodulen wird zudem eine sehr hohe Gestaltungsvariabilität aus wenigen Grundelementen (im Idealfall ein einziger Typ von Tauscherblech) erreicht. Durch den Aufbau des Wärmetauschers aus einzelnen Modulen ergeben sich entsprechend der beschriebenen Ausgestaltungsmerkmale die bezüglich des Innenkühlkreislaufs vorteilhaften, voneinander getrennten und damit in entgegengesetzte Richtungen durchströmten Wärmetauschersegmente in axialer Richtung der dynamoelektrischen Maschine ohne zusätzliche aufwendige Luftleitbleche im Inneren der Wärmetauschermodule.

Wie aus der Beschreibung der bevorzugten Ausführungsbeispiele ersichtlich ist es möglich, einen sowohl in der technischen Komplexität, in Bezug auf Materialeinsatz und Herstellkosten als auch im Hinblick auf die Effizienz der Wärmetauschung optimierten rekuperativen Plattenwärmetauscher zu realisieren. Bei einer dynamoelektrischen Maschine kann anstatt eines herkömmlichen Aufsatzröhrenkühlers ein rekuperativer Plattenwärmetauscher der beschriebenen Art eingesetzt werden. Die Figur 1 zeigt eine schematische Darstellung eines herkömmlichen Rohrbündelkühlers einer dynamoelektrischen Maschine, wie er als Anbaukühler z.B. bei Luft/Luftgekühlten Maschinen in geschlossener Ausführung verwendet wird.

Die in den Ausführungsbeispielen beschriebenen Plattenwärmetauscher können aufgrund ihrer Ausbildungsmerkmale sowohl im Hinblick auf Herstellungskosten und Herstellungsaufwand als auch im Hinblick auf Eigengewicht, Volumen und Kühlleistung eine Verbesserung gegenüber den bisher im Elektromaschinenbau eingesetzten Rohrbündelkühlern darstellen.

## Patentansprüche

1. Dynamoelektrische Maschine mit einem geschlossenen Innenkühlkreislauf und einem Wärmetauscher in einem Wärmetauschergehäuse,
**dadurch gekennzeichnet,**
**daß** der Wärmetauscher als Plattenwärmetauscher mit Tauscherplatten (6) ausgebildet ist, wobei die Tauscherplatten (6) durch Abstandhalter (7) voneinander getrennt sind, die durch ein Prägeverfahren, insbesondere durch Tiefziehen, einseitig oder beidseitig in die Tauscherplatten (6) eingebracht sind.

2. Dynamoelektrische Maschine nach Anspruch 1, **dadurch gekennzeichnet, daß** der Plattenwärmetauscher ein Gas-Gas-Wärmetauscher, insbesondere ein Luft-Luft-Wärmetauscher, ist.

3. Dynamoelektrische Maschine nach Anspruch 1 oder 2, **dadurch gekennzeichnet, daß** der Strömungsweg für den Sekundärkühlmediumstrom parallel zum Rotor der dynamoelektrischen Maschine verläuft.

4. Dynamoelektrische Maschine nach einem der vorhergehenden Ansprüche, **dadurch gekennzeichnet, daß** die Strömungswege für die Medienströme im Plattenwärmetauscher im Kreuzstrom geführt sind.

5. Dynamoelektrische Maschine nach einem der vorhergehenden Ansprüche, **dadurch gekennzeichnet, daß** der Plattenwärmetauscher aus mehreren Modulen (42) besteht.

6. Dynamoelektrische Maschine nach Anspruch 5, **dadurch gekennzeichnet, daß** die Module (42) in Richtung parallel zum Rotor der dynamoelektrischen Maschine nebeneinander angeordnet sind.

7. Dynamoelektrische Maschine nach Anspruch 6, **dadurch gekennzeichnet, daß** die Strömungswege für den Primärmediumstrom durch die Module (42) in radialer Richtung zum Rotor der dynamoelektrischen Maschine verlaufen.

8. Dynamoelektrische Maschine nach Anspruch 6 oder 7, **dadurch gekennzeichnet, daß** die Strömungswege für den Primärmediumstrom durch die Module (42) voneinander getrennt sind.

9. Dynamoelektrische Maschine nach einem der vorhergehenden Ansprüche, **dadurch gekennzeichnet, daß** zwischen dem Stator der dynamoelektrischen Maschine und dem Plattenwärmetauscher Luftführungselemente vorgesehen sind.

10. Dynamoelektrische Maschine nach einem der vorhergehenden Ansprüche, **dadurch gekennzeichnet, daß** es sich bei der dynamoelektrischen Maschine um eine Maschine mit zweiflutigem Innenkühlkreislauf handelt, wobei der Kühlmediumsstrom im mittleren Bereich (32) des Plattenwärmetauschers (29) aus der dynamoelektrischen Maschine heraus und durch den Wärmetauscher strömt, anschließend in einem benachbarten Raum innerhalb des Wärmetauschergehäuses umgelenkt wird und durch die Randbereiche (33) des Wärmetauschers wieder zurück in die dynamoelektrischen Maschine strömt.

11. Dynamoelektrische Maschine nach einem der vorhergehenden Ansprüche, **gekennzeichnet durch** ein direkt auf der Welle (36) der dynamoelektrischen Maschine sitzendes Lüfterrad (38) oder einen separaten Lüfter (40).

12. Dynamoelektrische Maschine nach einem der vorhergehenden Ansprüche, **dadurch gekennzeichnet, daß** die Tauscherplatten (6) an den Kontaktstellen der Abstandhalter (7) durch Punktschweißen, Kleben, Nieten oder Löten miteinander verbunden werden.

13. Dynamoelektrische Maschine nach einem der vorhergehenden Ansprüche, **dadurch gekennzeichnet, daß** neben den Prägungen für die Abstandhalter (7) weitere Prägungen zur Erhöhung der aktiven Wärmetauscherfläche und/oder zur Erhöhung der Luftverwirbelung eingebracht sind.

14. Dynamoelektrische Maschine nach einem der vorhergehenden Ansprüche, **dadurch gekennzeichnet, daß** zusätzliche Luftfinnen in die einzelnen Tauscherplatten eingebracht oder an diesen befestigt sind.

15. Dynamoelektrische Maschine nach einem der vorhergehenden Ansprüche, **dadurch gekennzeichnet, daß** die Tauscherplatten (6) so ausgestaltet sind, daß die Verbindungspunkte der Tauscherplatten (6) durch Drehen der einzelnen Tauscherplatten (6) um 90° oder 180° um eine Achse senkrecht zur Plattenebene und/oder durch Drehen um 180° um eine Achse in der Plattenebene zueinander ausrichtbar sind.

16. Dynamoelektrische Maschine nach einem der vorhergehenden Ansprüche, **dadurch gekennzeichnet, daß** die Tauscherplatten (6) an den Außenkanten Abkantungen (11) mit einem Winkel von vorzugsweise 15° bis 60° aufweisen, die sich beim Aufeinanderstapeln der Tauscherplatten (6) aufgrund des Abstandes der eingeprägten Abstandhalter (7) berühren.

17. Dynamoelektrische Maschine nach Anspruch 16, **dadurch gekennzeichnet, daß** die Tauscherplatten (6) an den Abkantungen (11) durch Bördelung oder Verschweißung oder Vernietung oder Verlötung oder Verklebung verbunden sind.

18. Dynamoelektrische Maschine nach einem der vorhergehenden Ansprüche, **dadurch gekennzeichnet, daß** die Module (42) an ihren Außenkanten oder Verbindungskanten durch L- oder U-förmige Blechprofile (16) mit Dichtstreifen (17), die vorzugsweise in hierfür vorgesehenen Aussparungen der einzelnen Module angebracht sind, verbunden und abgedichtet sind.

19. Dynamoelektrische Maschine nach einem der vorhergehenden Ansprüche, **dadurch gekennzeichnet, daß** der gesamte Wärmetauscher an den äußeren, zunächst offenen Kanten durch L-Blechprofile (16) oder U-Blechprofile (16) mit Dichtstreifen (17), die vorzugsweise in hierfür vorgesehenen Aussparungen angebracht sind, abgeschlossen und abgedichtet werden.

20. Dynamoelektrische Maschine nach einem der Ansprüche 9 bis 11, **dadurch gekennzeichnet, daß** die Wärmetauschermodule über die vorhandenen U-Blechprofile (16) und/oder L-Blechprofile (16) durch einen Rahmen oder mit Gewindestangen (18) und gesicherten Muttern (21) zusammengehalten werden.

21. Dynamoelektrische Maschine nach einem der vorhergehenden Ansprüche, **dadurch gekennzeichnet, daß** im Gehäuse des Kühlers für den Primärkühlkreislauf und/oder im Bereich von Kühlmediumseintritt und/oder Kühlmediumsauslaß des Sekundärkühlmediums zusätzliche Führungselemente (39) für eine Kühlmediumsführung vorhanden sind
